# EUROPÄISCHE PATENTSCHRIFT

(11) **EP 0 449 054 B1**
(45) Veröffentlichungstag und Bekanntmachung des Hinweises auf die Patenterteilung: **09.10.1996**
(21) Anmeldenummer: 91104003.8
(22) Anmeldetag: 15.03.1991
(51) Int. Cl.: B01D 71/42, B01D 69/08

(54) **Polyacrylnitril-Hohlfäden**
Hollow polyacrylonitrile fibres
Fibres creuses en polyacrylonitrile

(30) Priorität: 28.03.1990 DE 4009865
(43) Veröffentlichungstag der Anmeldung: 02.10.1991
(73) Patentinhaber: Akzo Nobel N.V., NL-6824 BM Arnhem (NL)
(72) Erfinder: Klee, Jürgen Rudolf, Dr., W-4047 Dormagen 1 (DE); Türck, Günter, Dr., W-4047 Dormagen 1 (DE); Naunheim, Wilfried, W-4047 Dormagen 1 (DE); Neukam, Theo, Dr., W-4047 Dormagen (DE)
(74) Vertreter: Fett, Günter

(56) Entgegenhaltungen:
- DD-A- 262 169
- US-A- 3 975 478

## Beschreibung

Die Erfindung betrifft verbesserte Hohlfäden aus Polyacrylnitril für Membrananwendungen mit asymmetrischer Porenstruktur des Mantels, dadurch gekennzeichnet, daß das Polyacrylnitril ein Homopolymerisat ist und daß die unmittelbar nach dem Spinnen erzeugte Porenstruktur des nassen Hohlfadens in einem "eingefrorenen", trockenen Zustand (durch letztstufige Behandlung mit Alkohol und Trocknung) fixiert ist.

Das Verfahren zur Herstellung der trockenen Hohlfäden mit stabiler, asymmetrischer Porenstruktur ist bevorzugt ein Dry-Wet-Spinnverfahren mit Glycerin-haltigen Kernflüssigkeiten, bestimmten Abzugs- und Nachbehandlungsbedingungen und letztstufiger Behandlung mit Alkoholen und Trocknung.

Die Herstellung asymmetrischer Polyacrylnitril-Hohlfäden ist bekannt. In US-A 4 084 036 wird die Herstellung von asymmetrischen PAN-Hohlfäden für die Entsalzung von Wasser, die Aufkonzentrierung von Alkoholen und zur Dialyse bei der Blutreinigung beschrieben. Verwendet wurden Copolymere aus 93 % ACN und 7 % VAC; die Spinnlösung ist 20 %ig, das polare Lösungsmittel ist Dimethylacetamid (DMAC). Es wird ein Dry-Wet-Verfahren verwendet, wobei die Luftstrecke zwischen Spinndüse und Fällbad 18 cm beträgt und das Koagulationsbad aus einer wäßrige DMAC-Lösung besteht. Die Kernflüssigkeit ist eine Glykollösung. Gewaschen wird mit Wasser zur Entfernung des Lösungsmittel DMAC. Eine Trocknung der Hohlfäden ist zu vermeiden, sie müssen feucht gehalten werden.

In der DD-A-262169 wird ein Verfahren zur Herstellung von asymmetrischen Hohlmembranen aus Acrylnitrilpolymerisaten beschrieben, bei dem eine Spinnlösung nach dem Naßspinnverfahren in senkrechter Richtung von unten nach oben in ein Spinnbad extrudiert wird. Es ist möglich, die noch im Gelzustand vorliegende Hohlmembran bis zu 400% zu recken. Die Schrift enthält ferner die Lehre, die Fäden gegebenenfalls in Wasser spannungsarm thermisch zu behandeln, um die poröse Struktur der Hohlmembranwand weiter zu stabilisieren. Diese asymmetrischen Membranen besitzen eine äußere trennaktive Begrenzungsschicht.

Die Nachteile entsprechender Hohlfäden sind u.a. durch ihre mangelnde chemische Resistenz infolge des Copolymeranteils gegeben sowie durch die instabile Polymerstruktur, die eine Trockenlagerung der Hohlfäden nicht erlaubt. Darüberhinaus sind bei Verwendung von Copolymeren keine optimalen Berstdruckfestigkeiten [für gegebene Kapillargeometrien und Strukturen (Porosität)] zu erzielen. Der große Vorteil von Polyacrylnitrilpolymeren im Falle poröser Kapillaren für den Einsatz als Membran bei wäßrigem Medium - nämlich seine starke Hydrophilie bzw. Benetzbarkeit - kann deswegen nur unzureichend bei industriellen Anwendungen mit chemisch agressiven Medien genutzt werden. Versucht man den chemischen Stabilitätsproblemen (Hydrolyse) durch Verwendung von PAN-Homopolymerisation zu begegnen, so treten bei der Hohlfaden-Herstellung Probleme auf. Zum einen verursachen nicht genügend gut gelöste Polymerpartikel Schwachstellen im Kapillarmantel, zum anderen bewirkt eine mit der Standzeit der Polymerlösung sich ändernde Viskosität geänderte Porenstruktur, d.h. Trenngrenzen und Permeationsraten.

Aufgabe der Erfindung ist, einen Hohlfaden mit asymmetrischer Porenstruktur für Membrananwendungen aus Polyacrylnitril-Homopolymerisaten ohne Mantelschwachstellen, d.h. mit hohen Berstdruckfestigkeiten sowie konstanten Trenngrenzen und Permeationsraten, der zusätzlich hohe Permeationsraten sowie eine gute Resistenz gegen Säuren und Basen und darüberhinaus eine stabile Porenstruktur des Mantels im getrockneten Zustand aufweist sowie ein Verfahren zur Herstellung eines entsprechenden Hohlfadens bereitzustellen.

Es wurde folgender Lösungsweg gefunden: Homopolymerisate aus Polyacrylnitril werden vorzugsweise gemäß DE-A 2 901 860 fehlerfrei gelöst und die entsprechenden Spinnlösungen stabilisiert. Die so erhaltene Spinnlösung wird in üblicher Weise zu einem Hohlfaden in einem Dry-Wet-Verfahren ausgesponnen; der Hohlfaden wird in an sich bekannter Weise nachbehandelt und gewaschen. Um die erreichte Porenstruktur in einem "eingefrorenen", d.h. trockenem Zustand zu stabilisieren, wird anschließend sukzessive Wasser, Kernflüssigkeit und Restlösungsmittel durch Alkohol ausgetauscht und der Alkohol anschließend abgedampft. Der erhaltene Hohlfaden weist überraschend gute Trennleistungen bei Membrananwendungen auf (hoher Permeatfluß für eine gegebene Trenngrenze sowie hoher Berstdruck bei gegebener Kapillargeometrie). Der Hohlfaden kann in trockener, zwischenstabilisierter Form gelagert sowie beim Modulbau weiterverwendet werden.

Gegenstand der Erfindung ist somit ein Hohlfaden aus Polyacrylnitril mit asymmetrischer Porenstruktur des Mantels, geeignet für Membrananwendungen, wobei das Polyacrylnitril, ein Homopolymerisat ist, das Polyacrylnitril 0-35 Gew.% TiO₂ enthält, die ursprünglich ersponnene Porenstruktur des nassen Hohlfadens durch Austausch von Wasser, Kernflüssigkeit und Restlösungsmittel durch Alkohol und anschließendes Abdampfen des Alkohols im trockenen, stabilen Zustand fixiert ist, der Innendurchmesser dF zwischen 0,3 und 1,5 mm, bevorzugt 0,8 - 1,22 liegt, das Verhältnis Außendurchmesser DF zu Innendurchmesser dF zwischen 1,1 und 1,8 beträgt und die Trenngrenze zwischen 1 und 2800 K-Dalton liegt.

In einer bevorzugten Ausführungsform ist Gegenstand der Erfindung ein Hohlfaden aus Polyacrylnitril mit asymmetrischer Porenstruktur des Mantels, dessen Innendurchmesser vorzugsweise zwischen 0,3 und 1,5 mm variiert und dessen Verhältnis von Außendurchmesser DF zum Innendurchmesser dF vorzugsweise zwischen DF/dF = 1,1 bis 1,8 variiert, mit guter Beständigkeit gegen Säuren und Basen, mit hohen Berstdruckfestigkeiten bei hohen Permeationsraten für variabel einstellbare Trenngrenzen 1 und 2800, vorzugsweise zwischen 10 K-Dalton und 2800 K-Dalton, mit stabiler Porenstruktur des Mantels im trockenen Zustand, dadurch gekennzeichnet, daß das Homopolymerisat von PAN verwendet wird sowie dadurch gekennzeichnet, daß die unmittelbar nach dem Spinnen erzeugte Porenstruktur des nassen Hohlfadens in einem eingefrorenen, trockenen Zustand fixiert ist.

Gegenstand ist weiterhin ein Verfahren zur Herstellung des Hohlfadens, dadurch gekennzeichnet, daß a) das PAN-Homopolymerisat in eine stabile, fehlerfreie und niedrig viskose Spinnlösung überführt wird, indem das Polymerisat in kaltem Zustand mit einem geeigneten Lösungsmittel wie DMF oder DMAC, gegebenenfalls unter Hinzufügung von Pigmenten wie TiO₂, angerührt und homogenisiert wird und anschließend durch einen Erhitzer gepumpt wird, hier vorzugsweise 3 bis 5 Min. auf 130 bis 150°C gehalten wird, anschließend auf die Temperatur der Spinnlösung beim Spinnprozeß von 80 bis 130°C heruntergekühlt wird, bevor es über übliche Filter und Pumpen durch eine übliche Hohlfadendüse bei gleichzeitiger Extrusion einer Kernflüssigkeit ausgesponnen wird und daß b) der ausgesponnene und ausgefällte Hohlfaden, der verschiedenen Wasch- und Nachbehandlungen unterzogen wurde, sukzessive von Kernflüssigkeit, Restlösungsmittel und Waschwasser im Austausch mit Alkohl befreit wird mit anschließender Verdampfung des Alkohols. Das Verfahren ist insbesondere nach den Ansprüchen 5-9 gekennzeichnet.

Das Polyacrylnitril wird vorzugsweise gemäß DE-A 2 901 860 gelöst. Das Verspinnen erfolgt vorzugsweise nach dem Dry-Wet-Verfahren. Unter der asymmetrischen Porenstruktur des Mantels wird verstanden, daß die Größe der Poren über den Membranquerschnitt sich ändert.

Die Vorteile von Kapillarmembranen aus PAN-Homopolymerisat sind insbesondere die bessere chemische Beständigkeit gegen Säuren und Laugen im Vergleich zu Kapillarmembranen aus Copolymerisaten. Darüberhinaus ist die Substanzfestigkeit des Polymerisats günstiger als bei Copolymerisaten. Da bei der Hohlfadenherstellung im Falle asymmetrischer, poröser Hohlfadenmäntel die Verstreckung der Fäden niedrig gewählt werden muß (zur Vermeidung ovaler Poren), die Materialfestigkeiten durch Verstreckung somit nicht verbessert werden können, sind Festigkeitsvorteile des Polymerisats sehr willkommen. Ein weiterer Vorteil der entwickelten Kapillarmembran besteht in der eingefrorenen Porenstruktur des Kapillarmantels. Hiermit erst ist es möglich, sowohl eine gute Weiterverarbeitbarkeit der Kapillaren als auch eine gute Trennleistung (Permeatfluß bei gegebener Trenngrenze), zu realisieren.

Zur Herstellung der erfindungsgemäßen Hohlfäden für den Membraneinsatz wird vorzugsweise auf folgende Weise vorgegangen:
Ein Acrylnitril-Homopolymerisat wird gemäß DE-A 2 901 860 gelöst. Zunächst wird das Polymerisat in einer Menge von 18 bis 28 % in einem geeigneten Lösungsmittel, z.B. DMF bzw. DMAC, kalt angerührt. Gegebenenfalls können Pigmente wie TiO₂ zusätzlich zugeführt werden. Dort erfährt die Suspension eine Aufheizung auf 130 bis 150°C bei einer Verweilzeit von 3 bis 5 Min. Während dieser Zeit findet eine Reifung und Vergleichmäßigung der Spinnlösung statt. Die Viskosität wird auf einen stabilen, niedrigen Wert abgesenkt ohne daß eine merkliche Verfärbung, d.h. Zersetzung der Spinnlösung eingetreten ist. Diese Spinnlösung wird anschließend wieder auf die beim Spinnprozeß vorgesehene Spinnlösungstemperatur abgekühlt. Die Spinnlösung wird über Filter und Pumpen einer üblichen Hohlfadenspinndüse zugeführt. Verwendet werden vorzugsweise Loch/Mantel-Düsen mit einem Innenlochdurchmesser von 0,4 mm. Der Durchmesser des Innenmantels beträgt vorzugsweise etwa 0,6 mm, der Durchmesser des Außenmantels 1,0 bis 1,5 mm. Die Spinnlösung wird durch den Mantel extrudiert, durch das Innenloch eine Kernflüssigkeit. Die Spinnlösungstemperatur im Spinnkopf beträgt 80 bis 130°C; die Temperaturen der Kernlösung werden gewöhnlich auf gleichem Niveau wie die Spinnlösung gehalten. Die Abzugsgeschwindigkeit von der Spinndüse beträgt 5 bis 40 m/min, vorzugsweise 20 m/min, die Aufwickelgeschwindigkeit das 1,1 bis 1,35-fache der Abzugsgeschwindigkeit. Zwischen Düse und Fällbad wird eine Verweilzeit um 0,1 sec. eingestellt (Varianten der Verweilzeit zwischen 3 x 10⁻³ bis 0,3 sec zeigten keinen signifikanten Einfluß auf die Hohlfadeneigenschaften). Die Volumenströme der Spinnlösungen bzw. Kernlösungen werden so eingestellt, daß die gewünschten Geometrien der Hohlfäden erhalten werden. Der Innenlochdurchmesser dF beträgt 0,3 bis 2,0 mm, vorzugsweise 0,3-1,5 mm, insbesondere 0,8 bis 1,2 mm; der Außendurchmesser DF des Hohlfadens wird so eingestellt, daß das Verhältnis DF/dF bei den dünnwandigen Hohlfäden vorzugsweise ca. 1,2 beträgt, bei den dickwandigen vorzugsweise ca. 1,6.

Nach Durchlaufen der Luftstrecke zwischen Düse und Fällbad werden die Hohlfäden in einem Koagulationsbad gefällt. Hier werden gewöhnlich wäßrige DMF- bzw. DMAC-Lösungen sowie reines Wasser verwendet. Die Temperatur des Fällbades wird zwischen 0 bis 60°C, insbesondre 0 und 40°C variiert. Die Fällbedingungen beeinflussen die Porosität des Mantels. Die Fällbadtemperaturen sind vorzugsweise 0-40°C für kleinere Daltonwerte und die höheren Temperaturen (5-40°C) für größere Daltonwerte (z.B. 10-2800 K-Dalton) geeignet.

Besonders bevorzugt werden besonders niedrige Fällbadtemperaturen von 0 bis 5°C für kleine Daltonwerte (z.B. 1-10 K-Dalton) eingesetzt, von etwa 5-25°C für höhere K-Dalton-Werte. Als Kernflüssigkeit werden Diole oder Triole, bevorzugt Glycerin, Glycerin/Wasser-Mlschungen, Glycerin/Lösungsmittel-Mischungen sowie Wasser verwendet. Die Trenngrenze wird in erheblichem Maße von der Zusammensetzung der Kernflüssigkeit bestimmt. Die Permeationsrate ist abhängig von der Trenngrenze sowie die Porenstruktur des Mantels. Nach Durchlaufen des Fällbades werden verschiedene Wasch- bzw. Nachbehandlungsbäder durchlaufen. Zumindest ein Bad muß dabei mindestens 80°C, bevorzugt 100°C aufweisen, um beim Trocknungsprozeß stabile Hohlfäden zu erhalten. Die bei der Nachbehandlung vorgenommene Verstreckung wird zur Erzielung möglichst hoher Berstdruckfestigkeiten auf kleiner/gleich 1,35 gehalten. Nach dem Wasch- bzw. Nachbehandlungsvorgang wird der Hohlfaden vorzugsweise auf eine Weife aufgewickelt, wobei deren Kantenlänge so bemessen ist, daß die angestrebten Kapillarlängen beim späteren Modulbau ohne Knickstellenbeanspruchung produziert werden. Während des Wickelvorgangs oder nach dem Wickelvorgang, wird der Hohlfadenstrang von z.B. 100 Kapillaren einer weiteren Nachbehandlung unterzogen. Hierbei wird Wasser und Kernflüssigkeit im Austausch mit einem Alkohol, z.B. Ethanol, entfernt, anschließend kann der Alkohol abdampfen. Man erhält einen trockenen Hohlfaden für den Modulbau mit "eingefrorener" Porenstruktur im Kapillarmantel.

Zur Beurteilung der Hohlfadeneigenschaften für Membrananwendungen sind verschiedene Meßgrößen notwendig. Die Ermittlung der Hohlfadengeometrie erfolgt an Gefrierbrüchen mit automatischen Geräten zur Flächemessung, z.B. Ominicon. Die Erfassung des Berstdrucks erfolgt an 15 cm langen, speziell in Schraubverschlüsse eingegossenen Einzelkapillaren. Durch Anlegen eines Wasserdrucks auf die Hohlfadeninnenseiten mit Möglichkeit zur Druckregistrierung beim Berstvorgang, kann der Berstdruck im nassen Zustand (in bar) bestimmt werden.

Die Ermittlung der Permeationsrate von entionisiertem Wasser (sogenannter Wasserwert) erfolgt an Versuchsmodulen. Durch die Kapillare der Versuchsmodule wird bei einer Druckdifferenz zwischen Innen- und Außenwand von 3 (6) bar ein Wasserstrom gepumpt, so daß eine Überströmgeschwindigkeit von 2 m/sec auftritt. Das durch die Kapillare von innen nach außen tretende Wasser wird gemessen und der Permeatstrom von entionisiertem Wasser in l/m² h x bar berechnet.

Die Ermittlung der Trenngrenzen erfolgt mit der gleichen Versuchsanordnung wie bei der Ermittlung des Wasserwertes. Allerdings wird hierbei statt des Wassers eine 1 %ige Dextran-Lösung mit variabler Molekülgröße verwendet.

Die Molekülgrößen variieren zwischen 1-2800, vorzugsweise 10 K-Dalton bis 2800 K-Dalton. Das an der Außenseite austretende Permeat wird nach Menge bis Konzentration erfaßt. Der Rückhalt, d.h. die Ursprungskonzentration der vorgelegten Lösung abzüglich der Permeatkonzentration, bezogen auf die Ursprungskonzentration in %, wird als Rückhaltswert R berechnet. Der Rückhalt verschiedener Dextran-Lösungstypen wird in Abhängigkeit des Lögarithmusses der verwendeten Dextran-Molekülgrößen graphisch aufgetragen und durch Extrapolation die Trenngrenze für einen Rückhalt R = 90 % bestimmt.

Zur Ermittlung des Permatflusses unter Praxisbedindungen wird der jeweils bei R-Werten > 80 % ermittelte Permatfluß verwendet. Der spezifische Permatfluß wird, bezogen auf die Fläche des Innendurchmessers, in 1/m² x h x bar berechnet und als Permatfluß mit R > 80% angegeben.

Neben dem Permeatfluß mit R > 80 % ist in manchen Fällen der spezifische Permeatfluß für Trennwirkungen R < 30 % von Interesse. Dieser spez. Permeatfluß für R < 30 % liegt nahe dem Wasserwert, falls er an noch nicht gebrauchten Hohlfäden bestimmt wurde.

Im folgenden werden bevorzugte Ausführungsformen der erfindungsgemäßen Hohlfäden angegeben.
a) Trenngrenze von 30 bis 50 K-Dalton (für 90 % Rückhalt, gemessen mit Dextranen) und einer spezifischen Permeationsrate von 4 bis 6 l/m² x h x bar, bei 1 %igen Dextranlösungen, welche zu mehr als 80 % zurückgehalten werden; Berstdruck 21 bar,DF/dF=1,2, dF= 1 mm.
b) Trenngrenze von 50 bis 80 K-Dalton und einer spezifischen Permeationsrate von 10 bis 17 l/m² x h x bar für ein Rückhalt R > 80 %; Berstdruck 13 bar, dF=1 mm, DF/dF = 1,2.
c) Trenngrenze von 400 bis 2800 K-Dalton mit Wasserpermeationsraten von 30 bis 140 l/m² x h x bar; DF/dF ca. 1,2, dF ca. 1 mm, Berstdruck ca. 14 bar.

Im folgenden werden bevorzugte Verfahrensausgestaltungen angegeben:
d) Spinnlösungskonzentration 18 % bis 28 %, z.B. 20% oder 28 %
e) Verfahren bei dem die Kernflüssigkeit aus Glycerin/Wasser im Gew.-Verhältnis 40:60 bis 60:40, vorzugsweise 1:1 sowie aus Glycerin besteht.
f) Abstand Spinndüse/Fällbad 2-30 cm, vorzugsweise 20-25 mm,
g) Verweilzeit zwischen Düsenaustritt und Fällbad ist zwischen 3.10⁻³ bis 0,3 sec,
h) Aufwickelgeschwindigkeit/Düsenaustrittsgeschwindigkeit = 1,1 bis 1,35,
i) Volumenstrom, Kernflüssigkeit/PAN-Lösung = 0,8:1 bis 1,2:1, vorzugsweise 0,8:1 bis 1,1:1,
j) Abzugsgeschwindigkeit 6-40 m/min,
k) Volumenströme Kernflüssigkeit/Polymerlösung sind bei gegebener Geschwindigkeit so bemessen, daß die Innenlochdurchmesser dF = 0,8 bis 1,2 mm und die DF/dF-Verhältnisse 1,1 bis 1,8 sind.

### Beispiel 1

Eine PAN-Suspension aus 20 % PAN-Homopolymerisat in DMF wird 5 min auf 140°C aufgeheizt, anschließend auf 96°C abgekühlt und durch eine Spinndüse mit einem Außenmanteldurchmesser von 1,0 mm und einem Innenlochdurchmesser von 0,6 mm ausgesponnen. Der Innenlochdurchmesser für den Austritt der Kernflüssigkeit beträgt 0,4 mm. Als Kernflüssigkeit wird Glycerin verwendet. Die Temperatur des Glycerins beträgt ebenfalls 96°C. Der Luftspalt zwischen Düse und Fällbad beträgt 23 mm, die Abzugsgeschwindigkeit von der Spinndüse 14 m/min, die Aufwickelgeschwindigkeit 16,2 m/min. Der Volumenstrom der Polymerlösung beträgt 13,7ml/min, der Volumenstrom der Kernflüssigkeit 11,5 ml/min. Das 1. Fällbad besteht aus Wasser, seine Temperatur beträgt 6°C. Das 2. Bad besteht ebenfalls aus Wasser, seine Temperatur beträgt ca. 25°C. Das 3. Bad besteht ebenfalls aus Wasser. Es wird 13 mal bei einer Wassertemperatur von 60°C durchlaufen. Das 4. Bad weist Kochwassertemperatur auf. Nach Verlassen des 4. Bades wird der Hohlfaden auf einer Weife mit einer Schenkellänge von 85 cm zu je 100 Hohlfäden aufgewickelt. Während des Aufwickelvorgangs werden die Hohlfäden feucht gehalten.

Anschließend werden die Hohlfadenbündel von der Weife entfernt, in Bündelstücke von 80 cm geschnitten, von lose anhaftendem Wasser bzw. leicht auslaufender Kernflüssigkeit befreit und anschließend in Ethanol-Lösungen 2 mal 15 min nachbehandelt. Anschließend werden die Hohlfäden den Alkohol-Lösungen entnommen und durch Verdampfen des Restalkohols getrocknet.

Erhalten werden 80 cm lange Kapillaren mit einem Innendurchmesser von dF = 1,02 mm, einem Außen-/Innen-Durchmesser DF/dF = 1,2, einem Berstdruck von 13 bar, einer Trenngrenze von 60 bis 70 K-Dalton für R = 90 % und einer spezifischen Permeationsrate für R > 80 % von 11 bis 16 l/m² x h x bar. Der Wasserwert beträgt ca.20 l/m² x h x bar.

### Beispiel 2

Bei den gleichen Versuchseinstellungen wie im ersten Beispiel, jedoch mit einer Polymerkonzentration von 28 % werden vergleichbare Kapillargeometrien erreicht. Der Berstdruck beträgt jetzt aber 21 bar, die spezifische Permeationsrate für R > 80 % sinkt auf 4 bis 6 l/m² x h x bar, die Trenngrenze beträgt ca. 40 K-Dalton.

### Beispiel 3

Bei vergleichbaren Versuchseinstellungen wie im ersten Beispiel, jedoch mit einer TiO₂-Menge von 20 %, bezogen auf PAN und einer Kernflüssigkeit aus Glycerin/Wasser im Verhältnis 1:1, erhält man in etwa noch vergleichbare Kapillargeometrien und Berstdruckfestigkeiten. Die Trenngrenze verschiebt sich jedoch drastisch auf 1100 K-Dalton. Der spezifische Permeatfluß für R > 80 % beträgt 17 l/m² x h x bar, der Wasserwert steigt jedoch auf > 50 l/m² x h x bar.

### Beispiel 4

Bei den gleichen Versuchseinstellungen wie im ersten Beispiel, jedoch mit einer Fällbadtemperatur von 0°C werden vergleichbare Kapillargeometrien erreicht. Der Berstdruck bleibt bei 13 bar. Die spezifische Permeationsrate für R > 80 % sinkt auf ca. 0,9 l/m² x h x bar, die Trenngrenze beträgt jetzt 9 K-Dalton.

### Beispiel 5

Bei den gleichen Versuchseinstellungen wie im ersten Beispiel, jedoch mit einer Polymerkonzentration von 28 % und einer Fällbadtemperatur von 0°C werden vergleichbare Kapillargeometrien erreicht. Die spezifische Permeationsrate für R > 80 % sinkt auf ca. 0,2 l/m² x h x bar, die Trenngrenze beträgt jetzt 2 K-Dalton.

## Patentansprüche

1. Hohlfaden aus Polyacrylnitril mit asymmetrischer Porenstruktur des Mantels, geeignet für Membrananwendungen, wobei das Polyacrylnitril ein Homopolymerisat ist, das Polyacrylnitril 0-35 Gew.% TiO₂ enthält, die ursprünglich ersponnene Porenstruktur des nassen Hohlfadens durch Austausch von Wasser, Kernflüssigkeit und Restlösungsmittel durch Alkohol und anschließendes Abdampfen des Alkohols im trockenen, stabilen Zustand fixiert ist, der Innendurchmesser dF zwischen 0,3 und 1,5 mm, bevorzugt 0,8 - 1,22 liegt, das Verhältnis Außendurchmesser DF zu Innendurchmesser dF zwischen 1,1 und 1,8 beträgt und die Trenngrenze zwischen 1 und 2800 K-Dalton liegt.

2. Hohlfaden nach Anspruch 1, dadurch gekennzeichnet, daß das Verhältnis DF/dF 1,15 bis 1,35 beträgt.

3. Hohlfaden nach Anspruch 1, dadurch gekennzeichnet, daß das Verhältnis DF/dF 1,5 bis 1,75 beträgt.

4. Hohlfaden nach Anspruch 1, dadurch gekennzeichnet, daß der Titandioxidanteil 15 bis 35 Gew.-%, bevorzugt 20-33 Gew.-%, bezogen auf Polyacrylnitril, beträgt.

5. Verfahren zur Herstellung des Hohlfadens nach Anspruch 1, wobei
a) das PAN-Homopolymerisat in eine stabile, fehlerfreie und niedrigviskose Spinnlösung überführt wird, indem das Polymerisat in kaltem Zustand mit einem geeigneten Lösungsmittel wie DMF bzw. DMAC, gegebenenfalls unter Hinzufügung von Pigmenten wie TiO₂, angerührt und homogenisiert wird, anschließend durch einen Erhitzer gepumpt wird, hier bei 130 bis 150°C gehalten wird und anschließend auf die Temperatur der Spinnlösung beim Spinnprozeß von 80 bis 130°C heruntergekühlt wird, bevor es über übliche Filter und Pumpen durch eine übliche Hohlfadendüse bei gleichzeitiger Extrusion einer Kernflüssigkeit, bevorzugt nach dem dry-wet-Verfahren ausgeponnen wird
b) der ausgesponnene und ausgefällte nasse Hohlfaden, sukzessive verschiedenen Wasch- und Nachbehandlungen, zumindest in einem Wasserbad von mindestens 80°C unterzogen wird und
c) von Rest-Kernflüssigkeit, Restlösungsmittel und Waschwasser im Austausch mit Alkohol befreit und durch anschließende Verdampfung des Alkohols zum Hohlfaden getrocknet wird.

6. Verfahren nach Anspruch 5, dadurch gekennzeichnet, daß als Alkohol beim Trocknungsprozeß Ethanol verwendet wird.

7. Verfahren nach Anspruch 5, dadurch gekennzeichnet, daß die nassen, noch Rest-Flüssigkeit aufweisenden, auf einer Weife abgelegten und dort naß gehaltenen Hohlfadenstränge an den Weifenauflagepunkten aufgeschnitten werden, so daß die Kernflüssigkeit sowie anhaftendes Wasser abfließen kann, das restliche Wasser und die restliche Kernflüssigkeit durch Eintauchen in wenigstens ein Alkohol-Bad entfernt wird und anschließend der Alkohol durch Trocknung verdampft wird.

8. Verfahren nach Anspruch 5, dadurch gekennzeichnet, daß die Spinnlösung und die Kernflüssigkeit eine Temperatur von 80-100°C, vorzugsweise von 96°C aufweisen, die Abzugsgeschwindigkeit von der Spinndüse 6-40 m/min, vorzugsweise 14 m/min beträgt, die Spinnlösungskonzentration des PAN-Homopolymerisats 18-28 % beträgt, als Spinnlösungsmittel DMF verwendet wird, als Kernflüssigkeit Glycerin oder eine Glycerin/Wassermischung verwendet wird, der Abstand der Spinndüse/Fällbad 2 bis 30 mm, vorzugsweise 20 bis 25 mm beträgt, zwischen Düse und Fällbad eine Verweilzeit von 3·1O⁻³ bis 0,4 sec eingestellt wird, das Fällbad aus Wasser oder wäßrigen DMF oder DMAC-Lösungen besteht, die Temperatur des Fällbades 0-60°C, vorzugsweise etwa 0-40°C, insbesondere O-5°C für kleinere Dalton-Werte (z.B. 1-10 K-Dalton) und etwa 6-25°C für größere Dalton-Werte (> 10 K-Dalton), aufweist, die Temperatur des 2. Wasser-Bades 20 bis 30°C beträgt, die Temperatur des 3. Wasserbades 50 bis 70°C, die Temperatur des 4. Wasserbades 80°C bis Kochwassertemperatur aufweist, die Aufwickelgeschwindigkeit das 1,1 bis 1,35-fache der Abzugsgeschwindigkeit an der Spinndüse ist und der Volumenstrom an Kernflüssigkeit zu Polymerlösung so bemessen ist, daß die Verhältnisse = 0,8-1,2 sind.

9. Verfahren nach Ansprüchen 5-8, dadurch gekennzeichnet, daß die Abzugsgeschwindigkeit von der Düse 6-40 m/min, die Aufwickelgeschwindigkeiten 6-40 m/min betragen wobei die Aufwickelgeschwindigkeit das 1,1-1,35-fache der Düsenabzugsgeschwindigkeit beträgt, bei gegebener Geschwindigkeit die Volumenströme Polymerlösung zur Kernflüssigkeit zur Polyacrylnitrilbildung so bemessen sind, daß die Innenlochdurchmesser dF = 0,8 bis 1,2 mm betragen und die DF/df-Verhältnisse 1,1 bis 1,8 sind.

10. Verfahren nach Anspruch 8, dadurch gekennzeichnet, daß die Kernflüssigkeit aus Glycerin/Wasser im Gew.-Verhältnis 40:60 bis 60:40 besteht.

## Claims

1. A hollow filament made of polyacrylonitrile, the sheath thereof having an asymmetrical pore structure, suitable for membrane applications, wherein the polyacrylonitrile is a homopolymer, the polyacrylonitrile contains from 0 to 35 wt.% of TiO₂, the initially spun pore structure of the wet hollow filament is fixed in the dry, stable condition by exchanging water, core fluid and residual solvent for alcohol and subsequent evaporation of the alcohol, the internal diameter dF is between 0.3 and 1.5 mm, preferably from 0.8 to 1.22 mm, the ratio of the external diameter DF to the internal diameter dF is between 1.1 and 1.8 and the separating limit is between 1 and 2800 K dalton.

2. The hollow filament according to claim 1, characterised in that the ratio DF/dF is from 1.15 to 1.35.

3. The hollow filament according to claim 1, characterised in that the ratio DF/dF is from 1.5 to 1.75.

4. The hollow filament according to claim 1, characterised in that the proportion of titanium dioxide is from 15 to 35 wt.%, preferably from 20 to 33 wt.%, referred to polyacrylonitrile.

5. A method for the preparation of the hollow filament according to claim 1, wherein
a) the PAN homopolymer is converted into a stable, defect-free spinning solution of low viscosity, by mixing and homogenising the polymer in the cold state with a suitable solvent such as DMF or DMAC, optionally with the addition of pigments such as TiO₂, then pumping it through a heater, maintaining it here at 130 to 150°C and then cooling it down to 80 to 130°C, the temperature of the spinning solution during the spinning process, before it is spun out via conventional filters and pumps through a conventional hollow filament spinneret with simultaneous extrusion of a core fluid, preferably by the dry-wet process,
b) the spun out and precipitated wet hollow filament is subjected successively to different washing and subsequent treatments, in at least one water bath at a temperature of at least 80°C and
c) freed from residual core liquid, residual solvent and washing water in the exchange for alcohol and, by subsequent evaporation of the alcohol, is dried to form hollow filaments.

6. The method according to claim 5, characterised in that ethanol is used as the alcohol in the drying process.

7. The method according to claim 5, characterised in that the wet strands of hollow filaments still containing residual fluid, which are placed on a reeling machine and there maintained wet, are cut at the points of support of the reeling machine so that the core liquid and adhering water can flow away, the residual water and the residual core fluid are removed by immersion in at least one alcohol bath and the alcohol is subsequently evaporated by drying.

8. The method according to claim 5, characterised in that the spinning solution and the core liquid are at a temperature of from 80 to 100°C, preferably of 96°C, the withdrawal rate from the spinneret is 6 to 40 m/min, preferably 14 m/min, the concentration of the PAN homopolymer in the spinning solution is from 18 to 28%, the spinning solvent employed is a glycerol/water mixture, the distance of the spinneret/coagulating bath is from 2 to 30 mm, preferably from 20 to 25 mm, a residence time of from 3·10⁻³ to 0.4 sec is established between the nozzle and the coagulating bath, the coagulating bath consists of water or aqueous DMF or DMAC solutions, the temperature of the coagulating bath is from 0 to 60°C, preferably from about 0 to 40°C, in particular from 0 to 5°C for smaller dalton values (for example, 1 to 10 dalton) and from about 6 to 25°C for greater dalton values (> 10 dalton), the temperature of the second water bath is from 20 to 30°C, the temperature of the third water bath is from 50 to 70°C, the temperature of the fourth water bath is from 80°C to the temperature of water used for cooking, the winding up rate is 1.1 to 1.35 times the withdrawal rate at the spinneret and the volumetric flow rate of core fluid to polymer solution is so proportioned that the ratios equal from 0.8 to 1.2.

9. The method according to claims 5 to 8, characterised in that the withdrawal rate from the nozzle is from 6 to 40 m/min, the winding up rates are from 6 to 40 m/min, with the winding up rate being 1.1 to 1.35 times the withdrawal rate from the nozzle, at a given rate the volumetric flow rates of the polymer solution to the core fluid are so proportioned for the formation of polyacrylonitrile that the internal diameter dF is from 0.8 to 1.2 mm and the DF/dF ratios are from 1.1 to 1.8.

10. The method according to claim 8, characterised in that the core fluid consists of glycerol/water in the weight ratio of 40:60 to 60:40.

## Revendications

1. Fibre creuse en polyacrylonitrile dont l'enveloppe a une structure poreuse asymétrique, laquelle fibre est appropriée pour une application en tant que membrane, le polyacrylonitrile étant un homopolymère et contenant de 0 à 35 % en poids de TiO₂, la structure poreuse en sortie de filière de la fibre creuse mouillée étant fixée à l'état sec et stable par échange de l'eau, du liquide central et du solvant résiduel contre de l'alcool, puis évaporation de l'alcool, le diamètre intérieur dF étant compris entre 0,3 et 1,5 mm, de préférence entre 0,8 et 1,22 mm, le rapport du diamètre extérieure DF au diamètre intérieur dF étant compris entre 1,1 et 1,8 et le seuil de coupure étant compris entre 1 et 2800 kDa.

2. Fibre creuse conforme à la revendication 1, caractérisée en ce que le rapport DF/dF est compris entre 1,15 et 1,35.

3. Fibre creuse conforme à la revendication 1, caractérisée en ce que le rapport DF/dF est compris entre 1,5 et 1,75.

4. Fibre creuse conforme à la revendication 1, caractérisée en ce que la teneur en dioxyde de titane est comprise entre 15 et 35 % en poids, de préférence entre 20 et 33 % en poids, rapporté au polyacrylonitrile.

5. Procédé de fabrication de la fibre creuse conforme à la revendication 1, lors duquel
a) l'homopolymère PAN est mis sous forme d'une solution de filage stable, exempte de défauts et faiblement visqueuse, par agitation et homogénéisation à froid du polymère dans un solvant approprié tel que le DMF ou le DMAC, éventuellement avec addition de pigments tels que TiO₂, pompage à travers un dispositif de chauffage, maintient à une température comprise entre 130 et 150 °C, puis refroidissement à la température de la solution de filage lors de l'opération de filage, c'est-à-dire 80 - 130 °C, avant passage par des filtres et pompes habituels et filage à travers une fitière d'extrusion de fibres creuses habituelle, avec extrusion simultanée d'un liquide central, de préférence selon le procédé "dry-wet",
b) on soumet la fibre creuse filée, précipitée et encore mouillée à différents posttraitements et lavages successifs dans au moins un bain aqueux à une température d'au moins 80 °C, et
c) on la débarrasse du liquide central résiduel, du solvant résiduel et de l'eau de lavage en les échangeant contre de l'alcool, puis on la sèche par évaporation de l'alcool afin d'obtenir la fibre creuse.

6. Procédé conforme à la revendication 5 caractérisé en ce que l'alcool utilisé pour l'opération de séchage est de l'éthanol.

7. Procédé conforme à la revendication 5, caractérisé en ce que les brins de fibre creuse mouillés contenant encore des liquides résiduels, déposés sur un dévidoir et maintenus à l'état mouillé sont ouverts par coupure le long de la ligne de contact avec le dévidoir de manière à ce que le liquide central ainsi que l'eau adsorbée puissent s'écouler, en ce que l'eau résiduelle et le liquide central résiduel sont éliminés par immersion dans au moins un bain d'alcool et en ce que l'alcool est ensuite évaporé par séchage.

8. Procédé conforme à la revendication 5, caractérisé en ce que la solution de filage et le liquide central ont une température comprise entre 80 et 100 °C, depréférence de 96 °C, en ce que la vitesse de tirage en sortie de filière d'extrusion est de 6 - 40 m/min, de préférence de 14 m/min, en ce que la concentration de l'homopolymère PAN dans la solution de filage est comprise entre 18 - 28 %, en ce que l'on utilise, comme solvant de filage, un mélange glycérol/eau, en ce que la distance entre la filière et le bain coagulant est comprise entre 2 et 30 mm, de préférence entre 20 et 25 mm, en ce que l'on ajuste le temps de séjour entre la filière et le bain coagulant a une valeur comprise entre 3.10⁻³ et 0,4 secondes, en ce que le bain coagulant est composé d'eau ou de solutions aqueuses de DMF ou de DMAC, en ce que la température du bain coagulant est comprise entre 0 et 60 °C, de préférence entre 0 et 40 °C, en particulier entre 0 et 5 °C pour des faibles masses moléculaires (par exemple 1 - 10 kDa) et entre environ 6 et 25 °C pour des masses moléculaires plus importantes (> 10 kDa), en ce que la température du deuxième bain d'eau est comprise entre 20 et 30 °C, celle du troisième bain d'eau entre 50 et 70 °C et celle du quatrième bain d'eau entre 80 °C et le point d'ébullition de l'eau, en ce que la vitesse d'enroulage est de 1,1 à 1,35 fois supérieure à la vitesse de tirage du fil en sortie de filière et en ce que le rapport du débit volumique du liquide central à celui de la solution polymère est ajusté à une valeur comprise entre 0,8 et 1,2.

9. Procédé conforme aux revendications 5 - 8, caractérisé en ce que la vitesse de tirage en sortie de filière est comprise entre 6 - 40 m/min, en ce que les vitesses d'enroulage sont comprises entre 6 et 40 m/min, les vitesses d'enroulage étant supérieures d'un facteur 1,1 à 1,35 à la vitesse de tirage en sortie de filière, le rapport du débit volumique de la solution de polymère à celui du liquide central étant ajusté, pour une vitesse donnée, de manière à ce que le diamètre intérieur dF soit compris entre 0,8 et 1,2 mm et que le rapport DF/dF soit compris entre 1,1 et 1,8.

10. Procédé conforme à la revendication 8, caractérisé en ce que le liquide central est composé de glycérol et d'eau en un rapport compris entre 40/60 et 60/40.
